(19) **Europäisches Patentamt**
**European Patent Office**
**Office européen des brevets**

(11) Veröffentlichungsnummer: **0 538 435 B1**

(12) **EUROPÄISCHE PATENTSCHRIFT**

(45) Veröffentlichungstag der Patentschrift: **07.09.94**

(51) Int. Cl.5: **B23D 65/00**, B23D 63/20, C21D 9/24

(21) Anmeldenummer: **92909879.6**

(22) Anmeldetag: **06.05.92**

(86) Internationale Anmeldenummer:
**PCT/EP92/00986**

(87) Internationale Veröffentlichungsnummer:
**WO 92/19408 (12.11.92 92/28)**

(54) **VERFAHREN ZUM MEHRSTUFIGEN BEARBEITEN VON ZÄHNEN AN SÄGEBLÄTTERN SOWIE SÄGENBEARBEITUNGSMASCHINE ZUM DURCHFÜHREN DES VERFAHRENS.**

(30) Priorität: **07.05.91 DE 4114942**

(43) Veröffentlichungstag der Anmeldung:
**28.04.93 Patentblatt 93/17**

(45) Bekanntmachung des Hinweises auf die Patenterteilung:
**07.09.94 Patentblatt 94/36**

(84) Benannte Vertragsstaaten:
**CH DE ES FR GB IT LI**

(56) Entgegenhaltungen:
**FR-A- 1 477 122**
**FR-A- 2 387 095**
**GB-A- 2 063 734**
**US-A- 3 502 312**

**PATENT ABSTRACTS OF JAPAN, vol. 6, no. 135 (C-115)(1013) 22. Juli 1982 & JP-A-57 060 017 (MEIDENSHA K.K.) 10 April 1982.**

(73) Patentinhaber: **VOLLMER WERKE MASCHINEN-FABRIK GMBH**
**Ehingerstrasse 34**
**D-88400 Biberach (DE)**

(72) Erfinder: **BECK, Ernst**
**Wennedacher Stra e 16**
**D-7951 Maselheim (DE)**
Erfinder: **POKORNY, Erich**
**Alte Biberacher Stra e 16**
**D-7957 Schemmerhofen (DE)**

(74) Vertreter: **Goetz, Rupert, Dipl.-Ing. et al**
**Wuesthoff & Wuesthoff**
**Patent- und Rechtsanwälte**
**Schweigerstrasse 2**
**D-81541 München (DE)**

**Beschreibung**

Die Erfindung betrifft ein Verfahren zum mehrstufigen Bearbeiten von Zähnen an Sägeblättern, bei dem

- ein Sägeblatt schrittweise für einander ergänzende Bearbeitungen durch eine erste Station und eine zweite Station bewegt wird,
- das Sägeblatt jeweils stillgesetzt wird, wenn ein Zahn eine Sollstellung in der ersten Station erreicht hat,
- dieser Zahn während des Stillstands des Sägeblattes in der ersten Station bearbeitet wird, und
- derselbe Zahn später auch in der zweiten Station bearbeitet wird.

Die Erfindung betrifft ferner eine Sägenbearbeitungsmaschine zum Durchführen eines solchen Verfahrens, mit

- einer Halterung für ein Sägeblatt,
- einer ersten und einer zweiten Station zum Bearbeiten je eines Zahns des Sägeblattes, und
- einer Vorschubeinrichtung, mit der sich das Sägeblatt schrittweise derart bewegen läßt, daß jeweils ein Zahn eine Sollstellung in der ersten Station einnimmt.

Bei einer bekannten Sägenbearbeitungsmaschine dieser Gattung (DE 2940730 A1) ist eine Halterung für ein Sägeblatt zwischen einem Lötgerät und einem Paar Flankenschleifgeräte angeordnet. Zum Reparieren eines mit Hartmetallplatten bestückten Sägeblattes werden zunächst alle Zähne mit einer beschädigten Hartmetallplatte nacheinander zum Ablöten dieser Hartmetallplatten in den Arbeitsbereich des Lötgeräts gebracht, anschließend alle freigewordenen Plattensitze nachgearbeitet, sodann - wiederum mit dem Lötgerät - neue Hartmetallplatten aufgelötet und schließlich diese Hartmetallplatten von den beiden Flankenschleifgeräten an den Zahnflanken und, wenn nötig, auch am Zahnumfang geschliffen. Die Flankenschleifgeräte gleichzeitig mit dem Lötgerät arbeiten zu lassen, ist nicht vorgesehen und ist wegen Zahnteilungsfehlern, die zumindest bei größeren Sägeblättern unvermeidlich sind, mit der bekannten Maschine auch nicht möglich. Infolgedessen bleibt in jedem Zeitpunkt entweder das Lötgerät oder das Paar Flankenschleifgeräte ungenutzt und die vollständige Bearbeitung eines Sägeblattes dauert entsprechend lang.

Der Erfindung liegt die Aufgabe zugrunde, die Bearbeitung eines Sägeblattes abzukürzen, bei dem an einzelnen oder sämtlichen Zähnen mehrere aufeinanderfolgende Arbeitsgänge auszuführen sind.

Die Aufgabe ist, soweit sie ein Verfahren betrifft, erfindungsgemäß ausgehend von einem Verfahren der eingangs beschriebenen Gattung dadurch gelöst, daß

- im voraus ein Ausgangspunkt festgelegt wird, der bei allen vorkommenden Zahnteilungsfehlern von einem vorbestimmten Rand des jeweils bei Stillstand des Sägeblattes in der zweiten Station stehenden Zahns entfernt ist,
- jeweils vor der Bearbeitung eines in der zweiten Station stehenden Zahns ein Sensor ausgehend vom Ausgangspunkt in Längsrichtung des Sägeblattes zu einem von der Stellung des Randes dieses Zahns abhängigen Bezugspunkt bewegt wird,
- eine Bearbeitungsvorrichtung jeweils um eine vom Weg des Sensors vom Ausgangspunkt zum Bezugspunkt abhängige Strecke aus einer Ruhestellung in eine Arbeitsstellung bewegt wird, in der sie den in der zweiten Station stehenden Zahn bearbeitet, und
- nach jeder Bearbeitung der Sensor zum Ausgangspunkt, und die Bearbeitungsvorrichtung in ihre Ruhestellung, zurückbewegt wird.

Damit wird erreicht, daß an einem Sägeblatt, das mehr oder weniger große und unregelmäßige Zahnteilungsfehler aufweist, zwei oder mehr Arbeitsgänge gleichzeitig ausgeführt werden können, ohne daß die Genauigkeit der Bearbeitung unter den Zahnteilungsfehlern leidet. Dabei ist es von untergeordneter Bedeutung, um welche Art Arbeitsgänge es sich handelt; als Beispiele seien das Aufbringen und eine anschließende Wärmebehandlung von Zahnspitzen aus hartem Werkstoff genannt, ferner das Auflöten und anschließende Schleifen von Hartmetallplättchen oder das Schleifen von Zahnbrust- und Zahnrückenflächen. In jedem Fall bedeutet die gleichzeitige Durchführung von zwei oder mehr Arbeitsgängen an einem Sägeblatt eine Zeitersparnis, die dazu beiträgt, die Herstellung oder die Reparatur des Sägeblattes zu verbilligen.

Vorteilhafte Weiterbildungen des erfindungsgemäßen Verfahrens sind Gegenstand der Ansprüche 2 bis 5.

Soweit die genannte Aufgabe eine Maschine betrifft, ist sie erfindungsgemäß ausgehend von einer Sägenbearbeitungsmaschine der eingangs genannten Gattung dadurch gelöst, daß in der zweiten Station ein Sensor zum Abtasten eines vorbestimmten Randes eines Zahns und eine Bearbeitungsvorrichtung zum Bearbeiten dieses Zahns gemeinsam in und entgegen der Bewegungsrichtung des Sägeblattes hin- und herbewegbar sind.

Vorteilhafte Weiterbildungen der erfindungsgemäßen Maschine sind Gegenstand der Ansprüche 7 bis 10.

Ein Ausführungsbeispiel der Erfindung wird im folgenden anhand schematischer Zeichnungen mit weiteren Einzelheiten erläutert. Es zeigen:

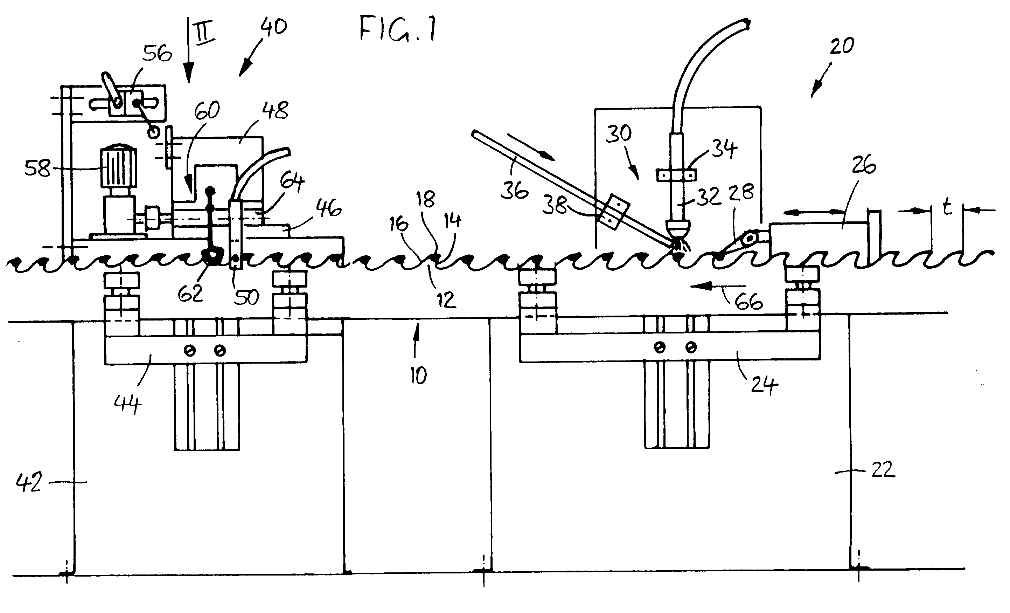

Fig. 1 eine erfindungsgemäße Sägenbearbeitungsmaschine in Seitenansicht;

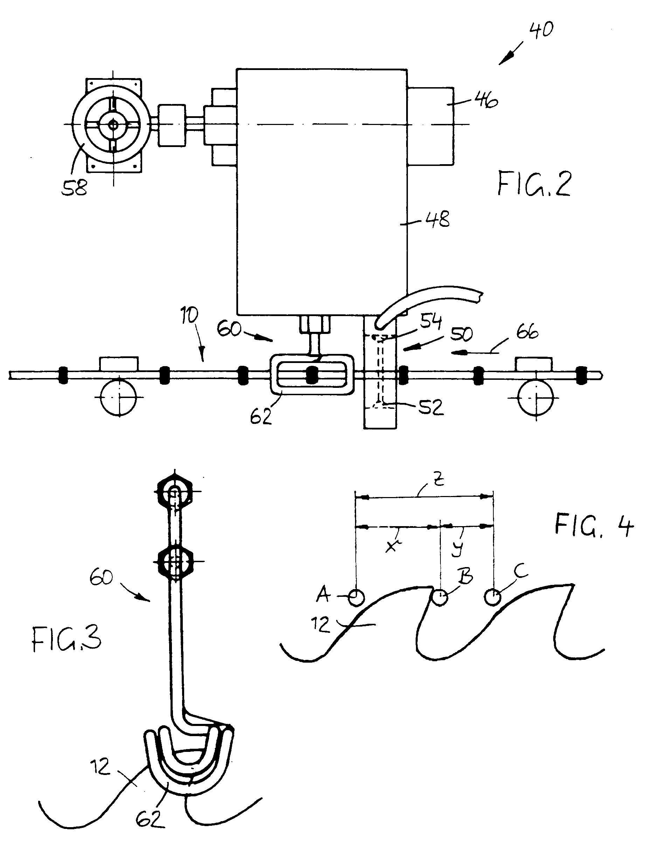

Fig. 2 die Teildraufsicht in Richtung des Pfeils II in Fig. 1;
Fig. 3 einen vergrößerten Ausschnitt aus Fig. 1; und
Fig. 4 ein Bewegungsschema zu Fig. 3.

Die dargestellte Maschine ist zur Bearbeitung eines Sägeblattes 10 für eine Bandsäge bestimmt, dessen Zähne 12 einzeln oder gruppenweise gestanzt sind und eine Zahnteilung t mit gewissen Fehlern aufweisen, die sich über mehrere Zähne hinweg zu merklichen Summenteilungsfehlern summieren können. Jeder Zahn 12 hat einen steilen Rand 14, der eine beim Sägen vorwärtsweisende Zahnbrust bildet, und einen Zahnrücken 16. Am Schnittpunkt von Zahnbrust und Zahnrücken jedes Zahns 12 soll eine Zahnspitze 18 aus geschmolzenem, beim Erkalten hartwerdenden Werkstoff aufgebracht werden und anschließend soll ein Übergangsbereich zwischen der Zahnspitze und dem Rest des Zahns angelassen, d.h. durch Erhitzen auf eine Temperatur unterhalb der Schmelztemperatur der Zahnspitze von Versprödung befreit werden.

Zum Aufbringen der Zahnspitzen 18 durchläuft das Sägeblatt 10 eine erste Station 20 mit einem Gestell 22, das eine höheneinstellbar Halterung 24 zum Führen des Sägeblattes, eine Vorschubeinrichtung 26 mit Klinke 28 zum Vorschieben des Sägeblattes sowie eine erste Bearbeitungsvorrichtung 30 mit einem Brenner 32, einer Brennerführung 34, einer Werkstoffstange 36 und einer Stangenführung 38 aufweist. Die Klinke 28 der Vorschubeinrichtung 26 ist schrittweise vor- und zurückbewegbar, greift zu Beginn jedes Vorwärtshubes am steilen Rand 14 eines Zahns 12 an und schiebt dann das Sägeblatt 10 um eine Zahnteilung vorwärts. Im vorliegenden Zusammenhang bedeutet vorwärts eine Längsbewegung des Sägeblattes 10 entgegen desssen Schnittrichtung, in der es beim Sägen bewegt wird. Die Werkstoffstange 36 besteht beispielsweise aus Stellit und ist längs ihrer Stangenführung 38 schrittweise oder kontinuierlich in dem Maß vorschiebbar, in dem Werkstoff durch Einwirkung des Brenners 32 von ihr abgeschmolzen wird. Der Brenner 32 ist längs der Brennerführung 34 einstellbar und, falls erforderlich, auf die Vorschubbewegungen des Sägeblattes 10 abgestimmt auf- und abbewegbar.

In einem Abstand, der ein Vielfaches der Zahnteilung t beträgt, folgt auf die erste Station 20 eine zweite Station 40, die ebenfalls ein Gestell 42 mit einer höheneinstellbaren Halterung 44 für das Sägeblatt 10 aufweist. Zur zweiten Station 40 gehört ferner ein Bett 46, das sich parallel zur Vorschubrichtung des Sägeblattes 10 erstreckt und einen in dieser Richtung hin- und herschiebbaren Schlitten 48 trägt. Am Schlitten 48 ist ein Sensor 50 in Form eines nach unten offenen gabelförmigen Bügels befestigt, der von oben her über das Sägeblatt 10 greift und auf je einer Seite von diesem einen Sender 52 und einen Empfänger 54 für eine Strahlung, beispielsweise sichtbares Licht, aufweist.

Am Gestell 42 der zweiten Station 40 ist ein Endschalter 56 angeordnet, der von Hand parallel zur Längsrichtung des Bettes 46 einstellbar ist und eine Ruhestellung definiert, aus der heraus der Schlitten 48 von einem Motor 58 entgegen der Vorschubrichtung des Sägeblattes 10 bewegbar ist.

Am Schlitten 48 ist, von der ersten Station 20 weiter entfernt als der Sensor 50, eine zweite Bearbeitungsvorrichtung 60 befestigt, die eine mehrfach gewendelte Induktionsschleife 62 aufweist. Diese hat ähnlich wie der Sensor 50 ein nach unten offenes gabelförmiges Profil, so daß die Zähne 12 bei der Vorschubbewegung des Sägeblattes 10 durch die Induktionsschleife 62 hindurchbewegbar sind. Der Sensor 50 und/oder die zweite Bearbeitungsvorrichtung 60 mit der Induktionsschleife 62 sind in einer Längsführung am Schlitten 48 einstellbar befestigt, so daß ihr Abstand voneinander veränderbar ist.

Während der schrittweise stattfindenden Vorschubbewegung wird das Sägeblatt 10 jeweils in Richtung des Pfeils 66 um eine Zahnteilung t derart vorwärtsbewegt, daß die Zahnbrust 14 eines Zahns 12 eine genau definierte Stellung in der ersten Station 20 einnimmt. Ein weiterer Zahn 12, der die erste Station 20 früher durchlaufen und den Zwischenraum zwischen dieser und der zweiten Station 40 schrittweise überwunden hat, nimmt nun in der zweiten Station 40 eine Stellung ein, die von vornherein nicht feststeht, da sie von der Summe aller Teilungsfehler des Sägeblattes 10 zwischen der ersten Station 20 und der zweiten Station 40 abhängig ist. Es ist deshalb nicht möglich, die zweite Bearbeitungsvorrichtung 60 von vornherein an einer für die Bearbeitung des jeweils in der zweiten Station 40 stehenden Zahns 12 optimalen Stelle anzuordnen. Damit aber die Induktionsschleife 62 sämtliche nacheinander durch sie hindurchlaufenden Zähne 12 gleichmäßig erhitzen kann, ist es erforderlich, die zweite Bearbeitungsvorrichtung 60 in bezug auf jeden einzelnen Zahn 12 genau zu positionieren. Dies wird folgendermaßen erreicht:

Die Ruhestellung des Schlittens 48 mit der zweiten Bearbeitungsvorrichtung 60 sowie die Anordnung des Sensors 50 am Schlitten 48 wird so gewählt, daß der Sensor 50 jeweils beim Stillsetzen des Sägeblattes 10 an einem Ausgangspunkt A steht, der vom steilen Rand 14 des in der zweiten Station 40 zu bearbeitenden Zahns 12 auf jeden Fall entfernt ist, mit diesem Rand also bei keinem zu erwartenden Summenteilungsfehler zwischen diesem Zahn und dem gleichzeitig in der ersten Station 20 stehenden Zahn zusammenfällt.

Jeweils nach dem Stillsetzen des Sägeblattes 10 wird der Schlitten 48 vom Motor 58 entgegen dem Pfeil 66 so weit bewegt, bis der Sensor 50 einen Bezugspunkt B erreicht, dessen Lage von Fall zu Fall durch den steilen Rand 14 des in der zweiten Station 40 zu bearbeitenden Zahns 12 bestimmt wird. Dabei legt der Sensor 50 und mit ihm die zweite Bearbeitungsvorrichtung 60 den Weg x zurück, der kleiner als die Zahnteilung t ist. Dieser Weg x genügt im dargestellten Beispiel zum Positionieren der zweiten Bearbeitungsvorrichtung 60 nicht, da die Induktionsschleife 62 wegen ihres Platzbedarfs und auch zur Vermeidung einer Erhitzung des Sensors 50 von diesem einen Abstand y hat. Der Motor 58 wird deshalb so eingestellt oder gesteuert, daß er den Schlitten 48 samt Sensor 50 und zweiter Bearbeitungsvorrichtung 60 nach Zurücklegen des Weges x noch um den Abstand y weiterbewegt, so daß er insgesamt die Strecke z = x + y zurücklegt.

Nun ist die zweite Bearbeitungsvorrichtung 60 so positioniert, daß die Induktionsschleife 62 den zu erhitzenden Zahn 12 in der vorgesehenen, unabhängig von Zahnteilungsfehlern genau reproduzierbaren Weise umschließt. Der Sensor 50 nimmt dabei einen Endpunkt C ein, der vom Bezugspunkt B den Abstand y hat.

Unter bestimmten Bedingungen, beispielsweise wenn es erwünscht ist, den Abstand y sehr klein zu halten oder gar auf den Betrag Null zu bringen, kann es erforderlich sein, daß der Sensor 50 und/oder die zweite Bearbeitungsvorrichtung 60 zyklisch höhenverstellbar sind. Im Regelfall hat der Abstand y jedoch einen endlichen Betrag, der vor der Bearbeitung eines Sägeblattes 10 fest eingestellt wird. Nach dem Abtasten jedes einzelnen in der zweiten Station 40 zu bearbeitenden Zahns 12, wobei die Bearbeitungsvorrichtung 60 gemeinsam mit dem Sensor 50 den von vornherein nicht feststehenden Weg x zurückgelegt hat, werden Bearbeitungsvorrichtung 60 und Sensor 50 also im Regelfall um eine fest eingestellte Strecke vom Betrag y weiterbewegt.

Für diese Weiterbewegung kann beispielsweise dadurch gesorgt sein, daß der Motor 58 ein Gleichstrommotor ist, der einen durch ein einstellbares Zeitglied definierten Nachlaufweg hat, nachdem der Sensor 50 den Bezugspunkt B erreicht hat. Alternativ kann der Motor 58 ein Schrittmotor sein, der noch eine einstellbare Anzahl Impulse erhält, nachdem der Sensor 50 den Bezugspunkt B erreicht hat.

**Patentansprüche**

1. Verfahren zum mehrstufigen Bearbeiten von Zähnen an Sägeblättern, bei dem

   - ein Sägeblatt (10) schrittweise für einander ergänzende Bearbeitungen durch eine erste Station (20) und eine zweite Station (40) bewegt wird,
   - das Sägeblatt (10) jeweils stillgesetzt wird, wenn ein Zahn (12) eine Sollstellung in der ersten Station (20) erreicht hat,
   - dieser Zahn (12) während des Stillstands des Sägeblattes (10) in der ersten Station (20) bearbeitet wird, und
   - derselbe Zahn (12) später auch in der zweiten Station (40) bearbeitet wird, dadurch **gekennzeichnet,** daß
   - im voraus ein Ausgangspunkt (A) festgelegt wird, der bei allen vorkommenden Zahnteilungsfehlern von einem vorbestimmten Rand (14) des jeweils bei Stillstand des Sägeblattes (10) in der zweiten Station (40) stehenden Zahns (12) entfernt ist,
   - jeweils vor der Bearbeitung eines in der zweiten Station (40) stehenden Zahns (12) ein Sensor (50) ausgehend vom Ausgangspunkt (A) in Längsrichtung des Sägeblattes (10) zu einem von der Stellung des Randes (14) dieses Zahns (12) abhängigen Bezugspunkt (B) bewegt wird,
   - eine Bearbeitungsvorrichtung (60) jeweils um eine vom Weg (x) des Sensors (50) vom Ausgangspunkt (A) zum Bezugspunkt (B) abhängige Strecke (z) aus einer Ruhestellung in eine Arbeitsstellung bewegt wird, in der sie den in der zweiten Station (40) stehenden Zahn (12) bearbeitet, und
   - nach jeder Bearbeitung der Sensor (50) zum Ausgangspunkt (A), und die Bearbeitungsvorrichtung (60) in ihre Ruhestellung, zurückbewegt wird.

2. Verfahren nach Anspruch 1, dadurch **gekennzeichnet,** daß die Ruhestellung der Bearbeitungsvorrichtung (60) in einem vorbestimmten Abstand (y) vom Ausgangspunkt (A) des Sensors (50) angeordnet wird und die Strecke (z), um welche die Bearbeitungsvorrichtung (60) bewegt wird, um diesen Abstand (y) größer ist als der Weg (x) des Sensors (50) vom Ausgangspunkt (A) zum Bezugspunkt (B).

3. Verfahren nach Anspruch 2, dadurch **gekennzeichnet,** daß die Bearbeitungsvorrichtung (60) jeweils nach dem Stillsetzen des Sägeblattes (10) aus ihrer Ruhestellung dem in der zweiten Station (40) stehenden Zahn (50) entgegenbewegt wird.

4. Verfahren nach einem der Ansprüche 1 bis 3, dadurch **gekennzeichnet,** daß der Ausgangspunkt (A) so festgelegt wird, daß der Weg (x) des Sensors (50) zum Bezugspunkt (B) in jedem Fall kleiner als die Zahnteilung (t) ist.

5. Verfahren nach einem der Ansprüche 1 bis 4, dadurch **gekennzeichnet,** daß
   - auf den in der ersten Station (20) stehenden Zahn (12) ein beim Erkalten hartwerdender Werkstoff aufgeschmolzen wird, und
   - der in der zweiten Station (40) stehende Zahn (12) angelassen wird.

6. Sägenbearbeitungsmaschine zum Durchführen des Verfahrens nach Anspruch 1, mit
   - einer Halterung (24, 44) für ein Sägeblatt (10),
   - einer ersten und einer zweiten Station (20, 40) zum Bearbeiten je eines Zahns (12) des Sägeblattes (10), und
   - einer Vorschubeinrichtung (26), mit der sich das Sägeblatt (10) schrittweise derart bewegen läßt, daß jeweils ein Zahn (12) eine Sollstellung in der ersten Station (20) einnimmt,
   dadurch **gekennzeichnet,** daß in der zweiten Station (40) ein Sensor (50) zum Abtasten eines vorbestimmten Randes (14) eines Zahns (12) und eine Bearbeitungsvorrichtung (60) zum Bearbeiten dieses Zahns (12) gemeinsam in und entgegen der Bewegungsrichtung (66) des Sägeblattes (10) hin- und herbewegbar sind.

7. Sägenbearbeitungsmaschine nach Anspruch 6, dadurch **gekennzeichnet,** daß der Sensor (50) und die Bearbeitungsvorrichtung (60) in einem einstellbaren Abstand (y) voneinander an einem gemeinsamen Schlitten (48) angeordnet sind.

8. Sägenbearbeitungsmaschine nach Anspruch 6 oder 7, dadurch **gekennzeichnet,** daß der Sensor (50) einen Sender (52) und einen Empfänger (54) aufweist, die auf je einer Seite des Sägeblattes (10) an einem die Zähne (12) übergreifenden Bügel angeordnet sind.

9. Sägenbearbeitungsmaschine nach Anspruch 8, dadurch **gekennzeichnet,** daß der Sensor (50) in der Ebene des Sägeblattes (10) quer zu dessen Bewegungsrichtung (66) einstellbar ist.

10. Sägenbearbeitungsmaschine nach einem der Ansprüche 6 bis 9, dadurch **gekennzeichnet,** daß
    - die Bearbeitungsvorrichtung (30) in der ersten Station (20) eine Vorrichtung zum Aufschmelzen eines beim Erkalten hartwerdenden Werkstoffs ist, und
    - die Bearbeitungsvorrichtung (60) in der zweiten Station (40) eine Induktionsschleife (62) aufweist.

## Claims

1. A multistep finishing process carried out on saw blade teeth, wherein
   - a saw blade (10) is moved step by step through a first station (20) and a second station (40) for complementary finishing operations,
   - the saw blade (10) motion is stopped whenever a tooth (12) has reached a desired position in the first station (20),
   - that tooth (12) is finished during standstill of the saw blade (10) at the first station (20), and
   - the same tooth (12) later on is finished also at the second station (40),
     **characterized** in that
   - to begin with, a starting point (A) is set which will be located remote from a predetermined edge (14) of the tooth (12) which is stopped at the second station (40) whenever the saw blade (10) has come to a halt, no matter what the tooth pitch error is,
   - prior to each finishing operation of a tooth (12) at the second station (40), a sensor (50) is moved in longitudinal direction of the saw blade (10), starting from the starting point (A), to a reference point (B) which depends on the position of the edge (14) of that tooth (12),
   - a finishing device (60), in each instance, is moved from an inoperative position into an operative position by a distance (z) which depends on the path (x) of the sensor (50) from the starting point (A) to the reference point (B) to finish the tooth (12) which is located at the second station (40), and
   - following each finishing operation, the sensor (50) is returned to the starting point (A) and the finishing device (60) to the inoperative position.

2. The process as claimed in claim 1, characterized in that the inoperative position of the finishing device (60) is disposed at a predetermined spacing (y) from the starting point (A) of the sensor (50) and the distance (z) by which the finishing device (60) is moved is greater by this spacing (y) than the path (x) of the sensor (50) from the starting point (A) to the reference point (B).

3. The process as claimed in claim 2, characterized in that, whenever the saw blade (10) has come to a stop, the finishing device (60) is moved from its inoperative position to meet the tooth (50) which is stopped at the second station (40).

4. The process as claimed in any one of claims 1 to 3, characterized in that the starting point (A) is set such that the path (x) of the sensor (50) towards the reference point (B) always will be smaller than the tooth pitch (t).

5. The process as claimed in any one of claims 1 to 4, characterized in that
   - a material which hardens as it cools down is molten onto the tooth (12) which is stopped at the first station (20), and
   - the tooth (12) which is stopped at the second station (40) is annealed.

6. A saw finishing machine for carrying out the process as claimed in claim 1, comprising
   - fixtures (24, 44) for retaining a saw blade (10),
   - first and second stations (20, 40) for finishing a tooth (12) each of the saw blade (10), and
   - a feeder means (26) adapted to move the saw blade (10) stepwise in such manner that a respective tooth (12) will adopt a desired position in the first station (20),
   
   **characterized** in that a sensor (50) for scanning a predetermined edge (14) of a tooth (12) and a finishing device (60) for finishing that tooth (12) are reciprocable in common at the second station (40) in and against the direction of movement (66) of the saw blade (10).

7. The saw finishing machine as claimed in claim 6, characterized in that the sensor (50) and the finishing device (60) are arranged on a common carriage (48) at an adjustable spacing (y) from each other.

8. The saw finishing machine as claimed in claim 6 or 7, characterized in that the sensor (50) comprises a transmitter (52) and a receiver (54), disposed at one or the other side of the saw blade (10), respectively, and mounted on a yoke which spans the teeth (12).

9. The saw finishing machine as claimed in claim 8, characterized in that the sensor (50) is adjustable in the plane of the saw blade (10) transversely of the direction of movement (66) thereof.

10. The saw finishing machine as claimed in any one of claims 6 to 9, characterized in that
    - the finishing device (30) at the first station (20) is a device for melt-applying a material which hardens as it cools down, and
    - the finishing device (60) at the second station (40) comprises an induction loop (62).

## Revendications

1. Procédé pour usiner en plusieurs étapes des dents sur des lames de scie, dans lequel :
   - on déplace pas-à-pas une lame de scie (10) à travers une première station (20) et une seconde station (40), pour des opérations qui se complètent mutuellement,
   - on arrête la lame de scie à chaque fois qu'une dent (12) a atteint une position de consigne dans la première station (20),
   - on usine cette dent (12) pendant l'arrêt de la lame de scie (10) dans la première station (20), et
   - on usine la même dent (12) plus tard également dans la seconde station (40), caractérisé en ce que
   - on détermine au préalable un point de départ (A) qui, pour toutes les erreurs des répartitions des dents se produisant, est éloigné d'une bordure prédéterminée (14) de la dent respective (12) qui se trouve dans la seconde station (40) lors de l'arrêt de la lame de scie (10),
   - à chaque fois avant l'usinage d'une dent (12) qui se trouve dans la seconde station (40), on déplace un détecteur (50) dans la direction longitudinale de la lame de scie (10), en partant du point de départ (A) jusqu'à un point de référence (B) qui dépend de la position de la bordure (14) de cette dent (12),
   - on déplace un dispositif d'usinage (60) à chaque fois depuis une position de repos jusque dans une position de travail, sur un trajet (z) qui dépend de la course (x) du détecteur (50) depuis le point de départ (A) jusqu'au point de référence (B), ledit dispositif d'usinage usinant dans cette position de travail la dent (12) qui se trouve dans la seconde station (40), et
- après chaque usinage, on ramène le détecteur (50) jusqu'au point de départ (A), et le dispositif d'usinage (60) dans sa position de repos.

2. Procédé selon la revendication 1, caractérisé en ce que la position de repos du dispositif d'usinage (60) est disposée à une distance prédéterminée (y) du point de départ (A) du détecteur (50), et le trajet (z) sur lequel est déplacé le dispositif d'usinage (60) est supérieur de cette distance (y) par rapport à la course (x) du détecteur (50) depuis le point de départ (A) jusqu'au point de référence (B).

3. Procédé selon la revendication 2, caractérisé en ce que le dispositif d'usinage (60) est déplacé, à chaque fois après mise à l'arrêt de la lame de scie (10), depuis sa position de repos, à l'encontre de la dent (50) qui se trouve dans la seconde station (40).

4. Procédé selon l'une quelconque des revendications 1 à 3, caractérisé en ce que le point de départ (A) est déterminé de telle manière que la course (x) du détecteur (50) jusqu'au point de référence (B) est en tout cas inférieur au pas (t) des dents.

5. Procédé selon l'une quelconque des revendications 1 à 4, caractérisé en ce que
- on applique par fusion sur la dent (12) qui se trouve dans la première station (20) un matériau qui durcit au refroidissement, et
- on fait revenir la dent (12) qui se trouve dans la seconde station (40).

6. Machine d'usinage de scies pour la mise en oeuvre du procédé selon la revendication 1, comprenant :
- une monture (24, 44) pour une lame de scie (10),
- une première station et une seconde station (20, 40) pour l'usinage d'une dent respective (12) de la lame de scie (10), et
- un dispositif d'avance (26), au moyen duquel on peut déplacer la lame de scie (10) pas-à-pas de telle manière qu'une dent (12) occupe à chaque fois une position de consigne dans la première station (20),
caractérisée en ce que dans la seconde station (40) un détecteur (50) pour palper un bord prédéterminé (14) d'une dent (12) et un dispositif d'usinage (60) pour usiner cette dent (12) peuvent être déplacés en va-et-vient conjointement dans la direction de déplacement (66) de la lame de scie (10) et à l'opposé de celle-ci.

7. Machine d'usinage de scies selon la revendication 6, caractérisée en ce que le détecteur (50) et le dispositif d'usinage (60) sont agencés à une distance réglable (y) l'un de l'autre sur un chariot commun (48).

8. Machine d'usinage de scies selon l'une ou l'autre des revendications 6 et 7, caractérisée en ce que le détecteur (50) comprend un émetteur (52) et un récepteur (54) qui sont agencés de part et d'autre de la lame de scie (10) sur un étrier qui chevauche les dents (12).

9. Machine d'usinage de scies selon la revendication 8, caractérisée en ce que le détecteur (50) peut être réglé dans le plan de la lame de scie (10) perpendiculairement à la direction de déplacement (66) de celle-ci.

10. Machine d'usinage de scies selon l'une quelconque des revendications 6 à 9, caractérisée en ce que
- le dispositif d'usinage (30) dans la première station (20) est un dispositif pour appliquer par fusion un matériau qui durcit au refroidissement,
- le dispositif d'usinage (60) dans la seconde station (40) comprend une boucle à induction (62).

FIG.1

FIG.2

FIG.3

FIG. 4